# EUROPEAN PATENT APPLICATION

(11) **EP 4 697 115 A1**
(43) Date of publication of application: **18.02.2026**
(21) Application number: 24919654.4
(22) Date of filing: 11.07.2024
(51) Int. Cl.: G05B 23/02

(54) **SAFE REDUNDANT START-STOP SYSTEM AND METHOD FOR ONBOARD CONTROLLER, CHIP, AND INTELLIGENT VEHICLE**

(30) Priority: 22.01.2024 CN 202410099586
(71) Applicant: Chongqing Changan Technology Co., Ltd., Chongqing 401135 (CN)
(72) Inventor: WANG, Zhongcai, Chongqing 401135 (CN); WANG, Yuyang, Chongqing 401135 (CN)
(74) Representative: Groth & Co. KB
(86) International application number: PCT/CN2024/104973
(87) International publication number: WO 2025/156570

(57) **Abstract**

The present application relates to a safe redundant start-stop system and method for an onboard controller, a chip, and an intelligent vehicle. The system includes: a guardian component, a process management component, a state management component, and a health management component, wherein the guardian component is configured to start and monitor the process management component; the process management component is configured to start and monitor the state management component, the health management component, and each controller application; the health management component is configured to: receive process activity information of the state management component and each controller application, and generate a start-stop message according to an object that has encountered an anomaly; the state management component is configured to generate the start-stop message according to an application exit message received from the process management component; and the process management component restarts the controller applications and/or the state management component in the start-stop message. By addressing operating conditions of various controller applications by means of functional grouping and hierarchical structuring, the start and stop of controller applications can be managed safely and efficiently to ensure safe operation of a vehicle.

## Description

The present application claims the priority of a Chinese patent application filed with the Chinese Patent Office on January 22, 2024, with an application number of 202410099586.5 and entitled "Safe Redundant Start-stop System and Method for Onboard Controller, Chip, and Intelligent Vehicle", the contents of which are incorporated herein by reference in its entirety.

### Technical Field

The present application relates to the technical field of intelligent vehicles, in particular to a safe redundant start-stop system and method for an onboard controller, a chip, and an intelligent vehicle.

### Background

With the increasing intelligence of vehicles, the types and quantities of various embedded controllers in vehicles have become more complex, and the requirements for safe operation of embedded controllers have also become higher. During the operation of vehicles, it is necessary to efficiently manage the start and stop of an onboard controller under various circumstances to ensure the safe operation of vehicles.

Currently, the application software of an onboard controller of a vehicle (referred to as controller applications for short) is directly managed by an SOC (System on chip), which increases the complexity of the system on chip and may lead to more failure points, making maintenance more challenging. Moreover, when a controller application malfunctions, the system on chip has difficulty in starting or stopping the controller application in a timely manner; that is, the current onboard controller system has difficulty in safely and efficiently managing the start and stop of controller applications, which affects the safe operation of vehicles.

### Summary

One of the objectives of the present application is to provide a safe redundant start-stop system for an onboard controller to solve the problem in the prior art that it is difficult to safely and efficiently manage the start and stop of controller applications, which affects the safe operation of vehicles; a second objective is to provide a safe redundant start-stop method for an onboard controller; a third objective is to provide a chip; and a fourth objective is to provide an intelligent vehicle.

To achieve the above objectives, the technical solutions adopted in the present application are as follows:
a safe redundant start-stop system for an onboard controller is provided, and the system includes:
a guardian component, a process management component, a state management component, and a health management component;
wherein the guardian component is configured to start and monitor the process management component, and restart the process management component when the process management component stops running;
the process management component is configured to: start and monitor the state management component, the health management component, and each controller application; when any of the state management component and the health management component stops running, restart the component that has stopped running; when a controller application stops running, generate an application exit message according to the controller application that has stopped running, and send the application exit message to the state management component; and, in response to a received start-stop message, restart the controller application and/or the state management component indicated in the start-stop message;
the health management component is configured to: receive process activity information of the state management component and each controller application; when it is determined that any object of the state management component and the controller application has encountered an anomaly according to the process activity information, generate the start-stop message according to the object that has encountered an anomaly, and send the start-stop message to the process management component; and
the state management component is configured to generate the start-stop message according to the application exit message received from the process management component, send the start-stop message to the process management component, and periodically send process activity information of its own process to the health management component.

According to the above technical means, managing the start and stop of controller applications by means of functional grouping and hierarchical structuring can efficiently manage the start and stop of controller applications under various circumstances, achieve safe and redundant start and stop of controller applications, and ensure the safe operation of vehicles.

Optionally, the health management component also monitors the guardian component and obtains the resource status of the controller system. When the guardian component malfunctions and/or the controller system is determined to have encountered an anomaly based on the resource status, the health management component sends a signal to watchdog software to restart the controller system.

According to the above technical means, it is possible to handle controller system abnormalities and abnormal operation of the guardian component, so as to achieve the safe operation of a domain controller.

Optionally, upon receiving the start-stop message sent by the state management component, the process management component restarts the controller application indicated in the start-stop message; and upon receiving the start-stop message sent by the health management component, the process management component restarts the controller application and/or the state management component indicated in the start-stop message.

According to the above technical means, different operating conditions and objects are handled by using the state management component and the health management component, and the processing efficiency and the reliability of the system can be improved.

Optionally, the state management component includes a counting unit; the counting unit is configured to, when the state management component is restarted by the process management component, accumulate the number of restarting if it is determined according to startup parameters of the state management component that the state management component is restarted after an abnormal exit, and when the accumulated number of restarting exceeds a preset threshold, send a signal to watchdog software to restart a controller system.

According to the above technical means, startup parameters are set to prevent repeated restarting of the state management component within a short period, and to handle the operating condition where the state management component fails to restart successfully, thereby improving the reliability of the system.

Optionally, the process management component includes a monitoring and recovery unit; the monitoring and recovery unit is configured to, when any of the health management component and the state management component is restarted, send the current status of each controller application monitored by the restarted component to the restarted component, so as to restore the monitoring of the controller application by the restarted component.

According to the above technical means, by restoring the current status of the monitored controller application, it is possible to avoid the need to restart the monitored controller application due to the restart of the health management component or the state management component, thereby improving the restart efficiency.

Optionally, the process management component includes a toolchain unit; the toolchain unit is configured to, when a controller application is started, read SOA (Service-Oriented Architecture) toolchain configurations, obtain startup logic information, and start the controller application according to the startup logic information.

According to the above technical means, the startup logic of the controller application is managed through the configuration of the SOA toolchain, so as to more conveniently manage the startup process of the controller application.

Optionally, both the state management component and the health management component include a toolchain unit; the toolchain unit is configured to read SOA toolchain configurations, obtain operation logic information, and generate the start-stop message according to the operation logic information and the controller application that has stopped running or has encountered an anomaly.

According to the above technical means, the SOA toolchain configuration is read by the toolchain unit, such that the start-stop logic of the controller application that has stopped running or encountered an anomaly can be made configurable, making management more efficient and convenient.

Optionally, the state management component and the health management component further include an application combination unit; the application combination unit is configured to obtain a combination of controller applications according to the operation logic information and the controller application that has stopped running or has encountered an anomaly, and generate the start-stop message according to the combination.

According to the above technical means, by identifying a functional group to which the controller application that has stopped running or has encountered an anomaly belongs or the associated controller applications, logical operations can be performed on the entire combination of the controller applications, thereby improving the security of a domain controller.

A safe redundant start-stop method for an onboard controller includes:
pre-constructing a first-level functional component, a second-level functional component, and a third-level functional component, wherein the first-level functional component is configured to start and monitor the second-level functional component; the second-level functional component is configured to start and monitor the third-level functional component and each controller application; and the third-level functional component is configured to receive process activity information or application exit message of each controller application;
starting the first-level functional component in a guardian process mode;
when the first-level functional component detects that the second-level functional component stops running, restarting the second-level functional component by the first-level functional component;
when the second-level functional component detects that the third-level functional component stops running, restarting the third-level functional component by the second-level functional component; when the second-level functional component detects that a controller application stops running, generating an application exit message according to the controller application that has stopped running, and sending the application exit message to the third-level functional component; when the second-level functional component receives a start-stop message sent by the third-level functional component, restarting the controller application indicated in the start-stop message by the second-level functional component; and
when the third-level functional component determines according to the process activity information that a controller application has encountered an anomaly, generating the start-stop message according to the controller application that has encountered an anomaly; or generating the start-stop message according to the application exit message; and sending the start-stop message to the second-level functional component.

Optionally, the third-level functional component includes a state management component and a health management component; the state management component is configured to receive the application exit message sent by the second-level functional component; and the health management component is configured to receive process activity information of each controller application.

According to the above technical means, different operating conditions are handled by using the state management component and the health management component, and the processing efficiency and the system reliability can be improved.

Optionally, the health management component further receives process activity information of the state management component; and when it is determined that the state management component has encountered an anomaly according to the process activity information of the state management component, the health management component generates the start-stop message and sends the start-stop message to the second-level functional component.

According to the above technical means, the health management component is configured to monitor whether the state management component has encountered an anomaly, such that when the state management component has encountered an anomaly, it can be restarted in a timely manner, thereby improving the reliability of the system.

A chip is provided, wherein a safe redundant start-stop program for an onboard controller is stored on the chip; and when executed by a processor, the safe redundant start-stop program for an onboard controller implements the steps of any of the above safe redundant start-stop methods for an onboard controller.

An intelligent vehicle is provided, wherein the intelligent vehicle includes a memory, a processor, and a safe redundant start-stop program for an onboard controller that is stored in the memory and executable by the processor; and when executed by the processor, the safe redundant start-stop program for an onboard controller implements the steps of any of the above safe redundant start-stop methods for an onboard controller.

Beneficial effects of the present application are as follows: rather than restarting the controller system every time a controller application encounters an anomaly or exits, the operating conditions of various controller applications are addressed by means of functional grouping and hierarchical structuring, thereby enabling safe and efficient management of the start and stop of controller applications and ensuring the safe operation of the vehicle. Moreover, in combination with the SOA-based service architecture, the system can achieve rapid iteration and rapid adaptation to various embedded controllers in an entire vehicle.

### Brief Description of the Drawings

Fig. 1 is a functional architecture diagram of a safe redundant start-stop system for an onboard controller according to an embodiment of the present application;
Fig. 2 is an interaction sequence diagram of a state management component according to an embodiment of the present application;
Fig. 3 is an interaction sequence diagram of a health management component according to an embodiment of the present application;
Fig. 4 is a schematic diagram of an intelligent vehicle according to an embodiment of the present application.

### Detailed Description of the Embodiments

The implementation of the present application will be described below with reference to the accompanying drawings and optional embodiments. Those skilled in the art can easily understand other advantages and effects of the present application from the contents disclosed in this specification. The present application can also be implemented or applied through other different specific implementation manners, and various details in this specification can also be modified or changed in various ways based on different viewpoints and applications without departing from the spirit of the present application. It should be understood that the optional embodiments are merely for the purpose of illustrating the present application, rather than limiting the protection scope of the present application.

It should be noted that the diagrams provided in the following embodiments merely illustrate the basic concept of the present application in a schematic manner. Therefore, only the components relevant to the present application are shown in the diagrams, rather than being drawn according to the number, shape, and size of the components in actual implementation. In actual implementation, the types, quantities, and proportions of each component can be arbitrarily changed, and the component layout may also be more complex.

A vehicle embedded controller (also known as an onboard controller) is mainly composed of a microcontroller unit (MCU) and a system on chip (SOC). Systems such as Linux and QNX (i.e., the controller system) and application software (i.e., the controller application) run on the SOC. The controller application is configured to manage and control various functions and systems of a vehicle, such as engine control, vehicle stability control, braking system control, air conditioning system control, entertainment system control, etc.

Against the backdrop of software-defined vehicles, the intelligence of automobiles is becoming increasingly high, and the requirements for safe operation of embedded controllers in the entire vehicle are getting stricter. During the operation of a vehicle, how to efficiently manage the start and stop of controller applications under various circumstances has become an issue that needs to be resolved.

In response to the current problem of the difficulty in safely and efficiently managing the start and stop of controller applications, in the present application, the start and stop of controller applications are managed by constructing a plurality of components by means of functional grouping and hierarchical structuring, to efficiently manage the start and stop of controller applications in various situations, and achieve safe and redundant start and stop of controller applications.

The safe redundant start-stop system for an onboard controller of the present application can be deployed on a domain controller (such as a cockpit domain controller, an entertainment domain controller, a power domain controller, etc.) of a vehicle to achieve the safe and redundant start and stop of controller applications on that domain controller. The safe redundant start-stop system for an onboard controller can also be deployed on a central domain controller (such as the ECU) to achieve the safe and redundant start and stop of the controller applications of the entire vehicle.

The safe redundant start-stop system for an onboard controller in the embodiments of the present application runs on an embedded domain controller, and the domain controller consists of a single-chip microcomputer (MCU) and a plurality of system-on-chips (SOCs). The MCU is responsible for the power management of the entire embedded domain controller. Each chip on the domain controller generates a corresponding interface code through the service-oriented architecture (SOA) according to its own needs, and integrates the interface code into each controller application for deployment and operation respectively. It should be noted that this system is not limited to being used in a domain controller with only one MCU and one or more SOCs. It can also be used in a domain controller with a plurality of MCUs and a plurality of SOCs.

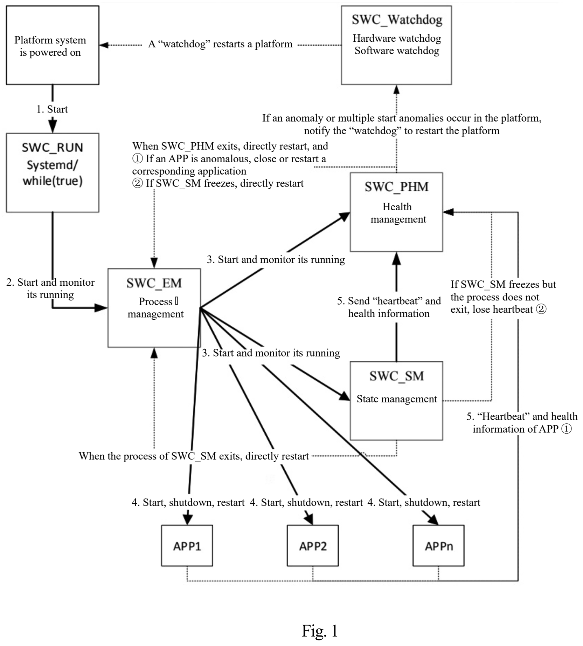

Specifically, as shown in Fig. 1, the above system includes: guardian component SWC_RUN, process management component SWC_EM, state management component SWC_SM, and health management component SWC_PHM.

The guardian component is a functional component that the onboard controller calls immediately after startup. The guardian component can be a module or a code snippet. For example, if systems such as Linux or QNX are running on the onboard controller, then the guardian component is managed and run by systemd (a system and service manager responsible for starting, stopping, and managing a guardian process); if the onboard controller is a real-time operating system such as a single-chip microcomputer (MCU), UCOS, or RTOS, the guardian component is a task component initialized after the onboard controller is powered on (a code snippet within a while(true) loop). When the guardian component starts, it starts and monitors the process management component SWC_EM. During a monitoring process, upon detecting that the process management component SWC_EM exits normally or exits abnormally for unknown reasons, the guardian component is responsible for restarting the process management component SWC_EM quickly within milliseconds.

The process management component is a functional component that manages operations such as starting, stopping, sleeping, and restarting of controller applications and combinations of controller applications on the onboard controller. After the process management component is started, it starts and monitors the state management component SWC_SM, the health management component SWC_PHM, and each controller application by creating child processes and subtasks. During a monitoring process, when the state management component SWC_SM or the health management component SWC_PHM exits normally or exits abnormally and stops running, it is responsible for quickly restarting within milliseconds the state management component or health management component that has stopped running.

The controller applications may be associated with each other, for example, a voice recognition application is associated with a door lock switch application to enable voice-activated locking. When a controller application finishes running, if this controller application is simply restarted, it may cause abnormal functions of other controller applications associated with this controller application, thereby affecting the safe operation of the vehicle. Therefore, when it is detected that a controller application finishes running, the controller application that has finished running is packaged into an application exit message. For example, the process name and process pid of the controller application that has finished running are packaged into an application exit message, and then the application exit message is sent to the state management component. Therefore, other controller applications associated with this controller application are determined through the state management component according to the associations between the controller applications, and then the process management component restarts this controller application and other controller applications associated with this controller application.

In this embodiment, the process management component further includes a toolchain unit. When the controller application is started, the toolchain unit reads SOA (Service-Oriented Architecture) toolchain configuration to obtain the startup logic information. The startup logic information is configured to determine the startup parameters, startup sequence and the like of the controller application. The controller application is started according to the startup logic information; that is, the process management component first starts the state management component SWC_SM and the health management component SWC_PHM. After the state management component and the health management component are running normally, according to a dependency relationship configured in the SOA toolchain and the relationship between the functional groups to which the applications belong before and after startup, etc., the process management component starts and monitors the controller applications: APP1, APP2, ..., APPn.

When the controller application starts, it can also generate code for the controller application to report its startup, exit and other states according to the SOA toolchain configuration, such that the controller application can "report" its running state to the process management component as soon as it starts. If the process management component does not receive the running state of the controller application within the time specified in the SOA toolchain configuration, the process management component will restart the controller application (first exit and then restart) or will not restart the controller application according to the regulations in the SOA toolchain configuration. If the process management component still does not receive the running state after restarting again, it will restart the controller application for several times continuously (the number of restarting can be configured) to execute the startup of the controller application according to logical requirements.

When the controller application is running, it can also call an interface as needed to "report" its corresponding running status to the process management component, such as: startup, exit, hibernation, upgrade, restart, custom status, etc.

The state management component is a functional component that performs logical management on the state of the controller application. After the state management component is started and when it receives an application exit message from the process management component, the state management component obtains the controller application that has stopped running according to the application exit message. Then, the state management component searches for the application function group to which the controller application that has stopped running belongs, or obtains, according to pre-configured association rules between controller applications, other controller applications associated with the controller application that has stopped running. Afterwards, the state management component packages the controller application that has stopped running and other associated controller applications into a start-stop message and sends this start-stop message to the process management component. After receiving this start-stop message, the process management component reads the controller applications that need to be restarted from the start-stop message and performs a restart operation.

In this embodiment, in order to achieve flexible configuration and management of controller applications, an operation logic for controller applications that have encountered an anomaly is set in the SOA toolchain configuration, such as the number of restart attempts, restart parameters, etc. Correspondingly, the state management component also includes a toolchain unit. The toolchain unit can read the information in the SOA toolchain configuration, obtain the logical information, package the logical information and the controller application that has stopped running, and generate start-stop information, such that the process management component SWC_EM performs operations according to the logic configured in the SOA toolchain.

In an example, the operation logic of the application combination (associated controller applications or the functional groups to which the controller applications belong) can also be set in the SOA toolchain configuration. The state management component also includes an application combination unit. The application combination unit can read the information in the SOA toolchain configuration, and obtain the controller application combination according to the controller application that has stopped running. For the controller applications in the application combination, the running status of these controller applications can also be detected. According to the SOA toolchain configuration, it is determined whether logical operations need to be performed on these controller applications. If necessary, the logical information is obtained according to the SOA toolchain configuration. The controller applications that need to be operated, the logical information, and the controller application that has stopped running are packaged together as start-stop information, and the start-stop information is sent to the process management component. Therefore, the state management component SWC_SM not only manages the logical operations of a single controller application, but also can manage the logical operations of the controller application combination. According to the running status of each controller application in a certain situation and the unified status of the application combination, the process management component can perform start-stop operations according to the logic configured in the SOA toolchain.

In an example, when the process management component restarts the state management component, an abnormal startup parameter of the state management component is newly added. When the state management component determines according to the abnormal startup parameter that it is a restart after an abnormal exit, the state management component records the number of restarting to avoid repeated startups. For example, when the number of restarting exceeds a preset threshold, a signal is sent to the watchdog software to restart the controller system. Specifically, a "command" indicating the restart of the SOC system is sent to the MCU in combination with hardware communication methods such as SPI, GPIO, and UART. For example, the MCU can identify whether the state of the SOC is abnormal by checking whether the range of signal inversion is normal. If the SOC is identified as abnormal, an interface is called to notify the MCU. In addition to identifying the software "watchdog" of the SOC on the domain controller, the MCU of the domain controller also identifies the software and hardware "watchdogs" of its own MCU, so as to restart the MCU itself and the entire domain controller.

In an example, after identifying that the state management component has undergone an abnormal restart through the abnormal startup parameters during restart, various controller applications monitored by the state management component are obtained. The process association component synchronizes the states of these controller applications at the time of restart to the state management component, such that the state management component resumes monitoring these controller applications. This avoids the need to first exit and then restart these monitored controller applications due to the restart of the state management component.

The health management component is a functional component that collects and arbitrates and performs other monitoring and managing tasks on the process operation data of controller applications. Specifically, various operating conditions in the lifecycle of controller applications of each embedded controller and domain-controller-level embedded controller in a vehicle include not only normal exit and abnormal exit, but also anomalies such as "freezing" and "lagging" caused by abnormal operation logic of the controller application software itself or other reasons (at this time, the process task does not exit). Therefore, after the health management component is started, it receives the "heartbeat" and health information sent by each controller application. The "heartbeat" and health information are collectively referred to as process activity information. The above health information is used to represent the running state information of the process, and the specific content is not limited, such as the running time information of the process, the execution logic information of functions in the process, and custom information. When it is determined that a controller application is abnormal based on the process activity information, the controller application which has encountered an anomaly is packaged into a start-stop message and sent to the process management component. After receiving the start-stop message, the process management component restarts the controller application in the start-stop message.

After setting an operation logic for the controller application which has encountered an anomaly in the SOA toolchain configuration, in one example, the health management component also includes a toolchain unit. The toolchain unit can read the operation logic of the controller application in the SOA toolchain configuration, obtain the logic information, and package the logic information and the controller application which has encountered an anomaly to generate start-stop information, such that the process management component SWC_EM performs operations according to the logic configured in the SOA toolchain, for example, operations such as restarting, shutting down, entering background operation, and entering an upgrade process.

In an example, an exception logic of the controller application is configured in the SOA toolchain configuration, such that the determination of whether the controller application is abnormal can be configured, and it is more convenient to manage these rules. After receiving the process activity information, according to the above exception logic, it can be determined whether a controller application is abnormal. The logic information and the controller applications determined to be abnormal are packaged to generate start-stop information. After the process management component receives the start-stop message, it restarts the controller applications in the start-stop message.

In an example, after the operation logic of the application combination is set in the SOA toolchain configuration, the health management component also includes an application combination unit. The application combination unit can read this information in the SOA toolchain configuration, obtain the controller application combination according to the abnormal controller applications, and detect the running states of these controller applications for the controller applications in the application combination. Whether logical operations need to be performed on these controller applications can also be determined according to the SOA toolchain configuration. If necessary, the logical information is obtained according to the SOA toolchain configuration, and these controller applications that need to be operated, the logical information, and the controller applications that have stopped running are packaged together as start-stop information, and the start-stop information is sent to the process management component. Therefore, similar to the state management component, the health management component SWC_PHM not only manages the logical operations of a single controller application, but also can manage the logical operations of the controller application combination. The health management component can enable the process management component to perform start-stop operations according to the logic configured in the SOA toolchain based on the running states of each controller application in a certain situation and the unified state of the application combination.

In this embodiment, the guardian component is a first-level functional component, and the process management component is a second-level functional component. The first-level functional component is configured to start and monitor the second-level functional component. The state management component and the health management component are third-level functional components, and are started and monitored by the second-level functional component. The state management component is configured to manage the operation logic when the controller application ends its operation, and the health management component is configured to determine the operation logic according to the process activity information of the controller application. Through managing the start and stop of the controller application by means of functional grouping and hierarchical structuring, it is possible to efficiently manage the abnormal conditions of the controller application in various situations. Moreover, when the controller application exits abnormally, it can be restarted in a timely manner, thereby realizing the redundancy function of the controller application and ensuring safe operation of the vehicle.

In this embodiment, the SOA-based service of each controller application is realized through the use of distributed communication technologies such as SOME/IP and DDS, and a unified interface is generated, such that the business logic for adapting to the safe redundant start and stop of each embedded controller of the entire vehicle is configurable, for example, the business logic of the "heartbeat", health information, judgment, shutdown, and restart logic of the monitored controller application. The deployment and operation of each embedded controller can be rapidly iterated and supported and other vehicle models can be rapidly adapted.

During operation, the process management component SWC_EM, state management component SWC_SM, and health management component SWC_PHM that implement redundant start-stop operation may also experience abnormal exits or operational anomalies such as "freezing" and "lagging" (the process tasks have not exited) caused by abnormal platform communication. Therefore, in order to improve the operational safety of the controller, the abnormal situations of the functional components at each level are handled in this embodiment to enhance the reliability of system operation.

Specifically, to ensure safe operation of the process management component SWC_EM, when the process management component exits abnormally, the guardian component will restart the process management component within milliseconds to ensure that the process management component is always online. If the process management component is restarted, the state management component SWC_SM, the health management component SWC_PHM, and other monitored controller applications will be shut down first and then restarted. When the process management component "freezes" or "lags" due to the resource status of the system, the health management component is used to monitor the process management component. When the process management component malfunctions, and when the process management component fails to operate normally after multiple restarts in a short period, a signal will be sent to the watchdog software to restart the controller system.

A health management component is also used to monitor the guardian component and obtain the resource status of the controller system running the process management component. When the guardian component malfunctions and/or the controller system is determined to be abnormal according to the resource status (e.g., the CPU is at 100% for a long time, and other indicators such as disk and IO are abnormal), a signal is sent to the watchdog software to restart the controller system.

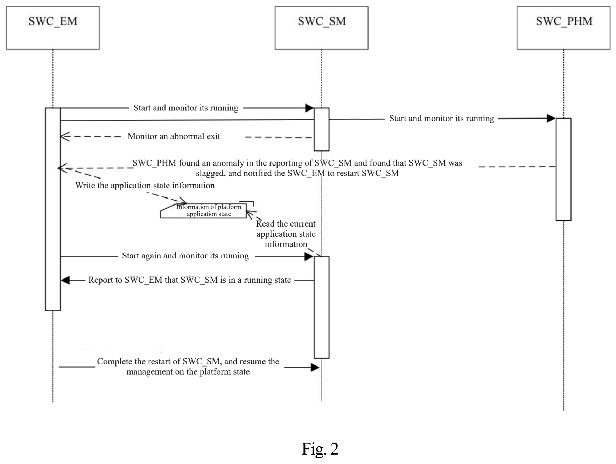

To ensure safe operation of the state management component SWC_SM, as shown in Fig. 2, upon monitoring that the state management component exits abnormally, the process management component saves the current status of each controller application monitored by the state management component. After the state management component is started, it sends the current status of each controller application to the state management component to resume the monitoring of the controller applications by the state management component, thereby avoiding the need to first exit and then restart the monitored controller applications due to the restart of the state management component itself. Moreover, the state management component notifies its own state to the health management component. In response to the possible situations of "freezing" or "lagging" of the state management component, the state management component periodically sends process activity messages (including "heartbeats" and health information) of its own process to the health management component. If the health management component detects an abnormal heartbeat packet of the state management component and determines that the state management component is in a "lagging" or "freezing" state according to the logic and health information configured in the SOA toolchain, the health management component generates a start-stop message and sends the start-stop message to the process management component, such that the process management component restarts the state management component.

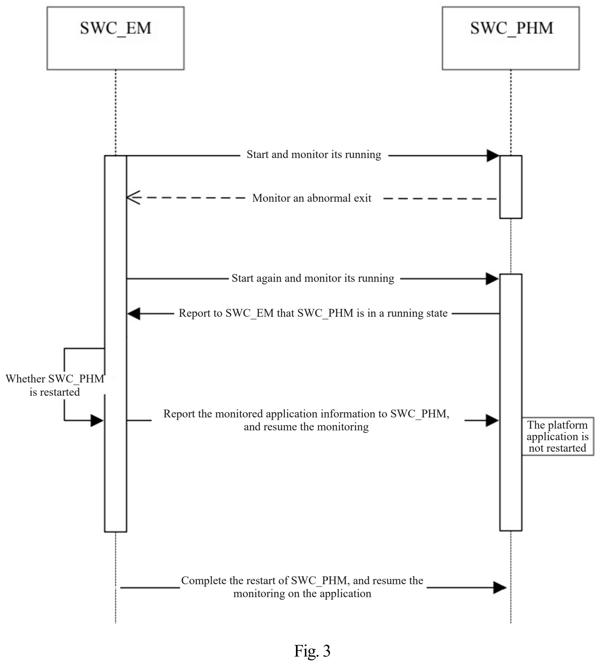

To ensure safe operation of the health management component, as shown in Fig. 3, upon monitoring that the health management component exits abnormally, the process management component immediately restarts the health management component and saves the current status of each controller application monitored by the health management component. After the health management component is started, the current status of each controller application is sent to the health management component to resume the monitoring of the controller applications by the health management component, thereby avoiding the need to first exit and then restart the monitored controller applications due to the restart of the health management component itself.

In one example, when the health management component and the process management component are abnormal, the restart of the controller system is completed through the cooperation of the hardware "watchdog" of the controller hardware and the software "watchdog" of the controller system.

In summary, in this embodiment, it is not necessary to restart the controller system when the controller application has encountered an anomaly or exits. Instead, various operating conditions (normal exit, abnormal exit, freezing, OTA upgrade, etc.) are resolved one by one by means of functional grouping and hierarchical structuring. Combined with the SOA-based service, the deployment and operation of various embedded controllers in an entire vehicle can be rapidly iterated and supported, such as the deployment and operation of a domain controller with only one microcontroller unit (MCU) plus one system-on-a-chip (SOC), and a domain controller with a plurality of MCUs plus a plurality of SOCs. If it is a vehicle-wide anomaly involving cross-chip or cross-domain controllers, the anomaly can also be resolved through a chip-by-chip and domain-controller-by-domain-controller approach.

Based on the safe redundant start-stop system for an onboard controller, the present application also provides a safe redundant start-stop method for an onboard controller. First, the first-level functional component, the second-level functional component, and the third-level functional component are pre-constructed. Then, the first-level functional component is started in the form of a guardian process. After the first-level functional component is started, the second-level functional component is started and monitored. After the second-level functional component is started, the third-level functional component and each controller application are started and monitored. The third-level functional component is used to receive the process activity information or application exit message of each controller application.

When the first-level functional component detects that the second-level functional component has finished running, the first-level functional component is used to restart the second-level functional component.

When the second-level functional component detects that the third-level functional component has stopped running, the second-level functional component is used to restart the third-level functional component; when the second-level functional component detects that the controller application has stopped running, the second-level functional component generates an application exit message according to the controller application that has stopped running, and sends the application exit message to the third-level functional component; and when the second-level functional component receives a start-stop message sent by the third-level functional component, the second-level functional component is used to restart the controller application indicated in the start-stop message.

When determining that the controller application is abnormal according to the process activity information, the third-level functional component generates a start-stop message according to the abnormal controller application or generates a start-stop message according to the application exit message, and sends the start-stop information to the second-level functional component.

In this embodiment, the first-level functional component is the guardian component SWC_RUN, and the second-level functional component is the process management component SWC_EM. The third-level functional components are the state management component SWC_SM and the health management component SWC_PHM. Application components with redundant mechanisms that meet the functional safety requirements are pre-developed, including SWC_watchdog, SWC_RUN, SWC_EM, SWC_SM, SWC_PHM, etc. SWC_watchdog is a functional service component for the startup, stop, and restart of the hardware platforms of various embedded control chips in the entire vehicle and the platform system, and is also known as the hardware "watchdog" or the software "open dog".

The state management component is used to receive the application exit message sent by the second-level functional component, and the health management component is used to receive the process activity information of each controller application and the process activity information of the state management component. When it is determined according to the process activity information of the state management component process that the state management component has encountered an anomaly, the health management component generates a start-stop message and sends the start-stop message to the second-level functional component to restart the state management component; when it is determined according to the process activity information of the controller application that the state management component has encountered an anomaly, the health management component generates a start-stop message and sends the start-stop message to the second-level functional component to restart the controller application.

Specifically, in this embodiment, for the specific functions of the above safe redundant start-stop method for an onboard controller, reference can be made to the corresponding descriptions in the above safe redundant start-stop system for an onboard controller, and details are not repeated herein.

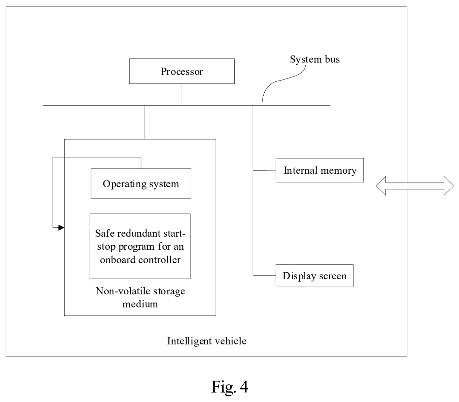

Based on the above embodiments, the present application also provides an intelligent vehicle. As shown in Fig. 4, the above intelligent vehicle includes a processor and a memory connected through a system bus. The processor of the intelligent vehicle is configured to provide computing and control capabilities. The memory of the intelligent vehicle includes a non-volatile storage medium and an internal memory. The non-volatile storage medium stores an operating system and a safe redundant start-stop program for an onboard controller. The internal memory provides an environment for the operation of the operating system and the safe redundant start-stop program for an onboard controller in the non-volatile storage medium. When the safe redundant start-stop program for an onboard controller is executed by the processor, the steps of any of the above safe redundant start-stop methods for an onboard controller are implemented.

The embodiments of the present application also provide a chip, for example, an SOC chip. A safe redundant start-stop program for an onboard controller is stored on the above chip; and when the safe redundant start-stop program for an onboard controller is executed by a processor, the steps of any safe redundant start-stop method for an onboard controller provided by the embodiments of the present application are implemented.

In the description of this specification, descriptions referring to terms such as "one embodiment", "some embodiments", "example", "specific example", or "some examples" mean that the specific features, structures, materials, or characteristics described in conjunction with the embodiment or example are included in at least one embodiment or example of the present application. In this specification, the schematic expressions of the above terms do not necessarily refer to the same embodiment or example. Moreover, the described specific features, structures, materials, or characteristics can be combined in a suitable manner in any one or N embodiments or examples. In addition, without conflict, those skilled in the art can combine and assemble different embodiments or examples and the features of different embodiments or examples described in this specification.

In addition, the terms "first" and "second" are used only for descriptive purposes and cannot be understood as indicating or implying relative importance or implicitly specifying the quantity of the technical features indicated. Therefore, features qualified with "first" and "second" may explicitly or implicitly include at least one such feature. In the description of the present application, the meaning of "N" is at least two, such as two, three, etc., unless otherwise specifically and clearly defined.

Any process or method description in the flowchart or described in other ways herein can be understood as representing a module, segment, or portion of code that includes one or N executable instructions for implementing customized logical functions or processes. Moreover, the scope of the optional implementations of the present application includes additional implementations, wherein the functions may be executed not in an order shown or discussed, including in a substantially simultaneous manner or in a reverse order according to the functions involved. This should be understood by those skilled in the technical field to which the embodiments of the present application belong.

The logic and/or steps represented in the flowcharts or otherwise described herein, for example, which can be regarded as a sequenced list of executable instructions for implementing logical functions, can be embodied in any computer-readable medium for use by an instruction execution system, apparatus, or device (such as a computer-based system, a system including a processor, or other systems that can fetch instructions from and execute instructions by an instruction execution system, apparatus, or device), or the logic and/or steps can be used in conjunction with these instruction execution systems, apparatuses, or devices. For the purposes of this specification, a "computer-readable medium" can be any apparatus that can contain, store, communicate, propagate, or transport a program for use by an instruction execution system, apparatus, or device, or in conjunction with these instruction execution systems, apparatuses, or devices. More specific examples (a non-exhaustive list) of computer-readable media include the following: an electrical connecting portion (electronic device) with one or N wires, a portable computer diskette (magnetic device), a random-access memory (RAM), a read-only memory (ROM), an erasable programmable read-only memory (EPROM or flash memory), an optical fiber device, and a portable compact disc read-only memory (CDROM). In addition, a computer-readable medium can even be paper or other suitable media on which the program can be printed, because the program can be obtained electronically by optically scanning the paper or other media, followed by editing, interpretation, or other suitable processing if necessary, and then the program can be stored in a computer memory.

It should be understood that various parts of the present application can be implemented by hardware, software, firmware or a combination thereof. In the above embodiments, N steps or methods can be implemented by software or firmware stored in a memory and executed by a suitable instruction execution system. For example, if implemented by hardware, as in another embodiment, it can be implemented by any one of the following technologies well known in the art or a combination thereof: discrete logic circuits having logic gate circuits for implementing logical functions on data signals, application-specific integrated circuits having suitable combinational logic gate circuits, programmable gate arrays (PGAs), field-programmable gate arrays (FPGAs), etc.

Those skilled in the technical field can understand that all or part of the steps carried in the methods of the above embodiments can be completed by relevant hardware instructed by a program. The program can be stored in a computer-readable storage medium. When the program is executed, it includes one or a combination of the steps of the method embodiments.

In addition, the functional units in each embodiment of the present application may be integrated into one processing module, or each unit may physically exist independently, or two or more units may be integrated into one module. The above integrated modules can be implemented in the form of hardware or in the form of software functional modules. If the integrated module is implemented in the form of a software functional module and sold or used as an independent product, it can also be stored in a computer-readable storage medium.

The above embodiments are merely preferred examples provided to fully illustrate the present application, and the protection scope of the present application is not limited thereto. Any equivalent substitutions or alterations made by those skilled in the art on the basis of the present application shall fall within the protection scope of the present application.

## Claims

1. A safe redundant start-stop system for an onboard controller, comprising:
a guardian component, a process management component, a state management component, and a health management component;
wherein the guardian component is configured to start and monitor the process management component, and restart the process management component when the process management component stops running;
the process management component is configured to: start and monitor the state management component, the health management component, and each controller application; when any of the state management component and the health management component stops running, restart the component that has stopped running; when a controller application stops running, generate an application exit message according to the controller application that has stopped running, and send the application exit message to the state management component; and, in response to a received start-stop message, restart the controller application and/or the state management component indicated in the start-stop message;
the health management component is configured to: receive process activity information of the state management component and each controller application; when it is determined according to the process activity information that any object of the state management component and the controller applications has encountered an anomaly, generate the start-stop message according to the object that has encountered an anomaly, and send the start-stop message to the process management component; and
the state management component is configured to generate the start-stop message according to the application exit message received from the process management component, send the start-stop message to the process management component, and periodically send process activity information of its own process to the health management component.

2. The safe redundant start-stop system for an onboard controller according to claim 1, wherein the health management component is further configured to monitor the guardian component and obtain resource status of a controller system, and when the guardian component has encountered an anomaly and/or it is determined according to the resource status that the controller system has encountered an anomaly, send a signal to watchdog software to restart the controller system.

3. The safe redundant start-stop system for an onboard controller according to claim 1, wherein upon receiving the start-stop message sent by the state management component, the process management component restarts the controller application indicated in the start-stop message; and upon receiving the start-stop message sent by the health management component, the process management component restarts the controller application and/or the state management component indicated in the start-stop message.

4. The safe redundant start-stop system according to claim 1, wherein the state management component includes a counting unit; the counting unit is configured to, when the state management component is restarted by the process management component, accumulate the number of restarting if it is determined according to startup parameters of the state management component that the state management component is restarted after an abnormal exit, and when the accumulated number of restarting exceeds a preset threshold, send a signal to watchdog software to restart a controller system.

5. The safe redundant start-stop system for an onboard controller according to claim 1, wherein the process management component comprises a monitoring and recovery unit; the monitoring and recovery unit is configured to, when any of the health management component and the state management component is restarted, send the current status of each controller application monitored by the restarted component to the restarted component, so as to restore the monitoring of the controller applications by the restarted component.

6. The safe redundant start-stop system for an onboard controller according to claim 1, wherein the process management component comprises a toolchain unit; the toolchain unit is configured to, when a controller application is started, read SOA (Service-Oriented Architecture) toolchain configurations, obtain startup logic information, and start the controller application according to the startup logic information.

7. The safe redundant start-stop system for an onboard controller according to claim 1, wherein both the state management component and the health management component comprise a toolchain unit; the toolchain unit is configured to read SOA toolchain configurations, obtain operation logic information, and generate the start-stop message according to the operation logic information and the controller application that has stopped running or has encountered an anomaly.

8. The safe redundant start-stop system for an onboard controller according to claim 7, wherein both the state management component and the health management component further comprise an application combination unit; the application combination unit is configured to obtain a combination of controller applications according to the operation logic information and the controller application that has stopped running or has encountered an anomaly, and generate the start-stop message according to the combination.

9. A safe redundant start-stop method for an onboard controller, comprising:
pre-constructing a first-level functional component, a second-level functional component, and a third-level functional component, wherein the first-level functional component is configured to start and monitor the second-level functional component; the second-level functional component is configured to start and monitor the third-level functional component and each controller application; and the third-level functional component is configured to receive process activity information or application exit message of each controller application;
starting the first-level functional component in a guardian process mode;
when the first-level functional component detects that the second-level functional component stops running, restarting the second-level functional component by the first-level functional component;
when the second-level functional component detects that the third-level functional component stops running, restarting the third-level functional component by the second-level functional component; when the second-level functional component detects that a controller application stops running, generating an application exit message according to the controller application that has stopped running, and sending the application exit message to the third-level functional component; when the second-level functional component receives a start-stop message sent by the third-level functional component, restarting the controller application indicated in the start-stop message by the second-level functional component; and
when the third-level functional component determines according to the process activity information that a controller application has encountered an anomaly, generating the start-stop message according to the controller application that has encountered an anomaly; or generating the start-stop message according to the application exit message; and sending the start-stop message to the second-level functional component.

10. The safe redundant start-stop method for an onboard controller according to claim 9, wherein the third-level functional component comprises a state management component and a health management component; the state management component is configured to receive the application exit message sent by the second-level functional component; and the health management component is configured to receive process activity information of each controller application.

11. The safe redundant start-stop method for an onboard controller according to claim 10, wherein the health management component further receives process activity information of the state management component; and when it is determined that the state management component has encountered an anomaly according to the process activity information of the state management component, the health management component generates the start-stop message and sends the start-stop message to the second-level functional component.

12. A chip, wherein a safe redundant start-stop program for an onboard controller is stored on the chip; and when executed by a processor, the safe redundant start-stop program for an onboard controller implements the steps of the safe redundant start-stop method for an onboard controller according to any one of claims 9 to 11.

13. An intelligent vehicle, wherein the intelligent vehicle comprises a memory, a processor, and a safe redundant start-stop program for an onboard controller that is stored in the memory and executable by the processor; and when executed by the processor, the safe redundant start-stop program for an onboard controller implements the steps of the safe redundant start-stop method for an onboard controller according to any one of claims 9 to 11.
